# FASCICULE DE BREVET EUROPEEN

(11) **EP 1 656 191 B1**
(45) Date de publication et mention de la délivrance du brevet: **27.08.2008**
(21) Numéro de dépôt: 04786261.0
(22) Date de dépôt: 04.08.2004
(51) Int. Cl.: A63H 27/08, B64C 31/06, B63B 35/79

(54) **LARGAGE AUTOMATIQUE KITESURF**
AUTOMATISCHES KITESURF-LÖSESYSTEM
AUTOMATIC KITESURF RELEASE SYSTEM

(30) Priorité: 19.08.2003 FR 0310031
(43) Date de publication de la demande: 17.05.2006
(73) Titulaire: Roger, Donatien, 76000 Rouen (FR)
(72) Inventeur: Roger, Donatien, 76000 Rouen (FR)
(74) Mandataire: Prieur, Patrick
(86) Numéro de dépôt international: PCT/FR2004/002087
(87) Numéro de publication internationale: WO 2005/018768

(56) Documents cités:
- EP-A- 1 302 398
- DE-U- 20 209 515
- DE-U- 20 302 460
- US-B1- 6 273 369

## Description

La présente invention concerne un dispositif de largage pour larguer automatiquement les lignes avants d'une aile de «kitesurf» (ou d'une aile de traction) constitué d'une planche de glisse ou surf et d'une aile de traction de type cerf-volant ou parapente équipée en 4 lignes au moins, afin de libérer le «kitesurfeur» (ou le pilote), lui-même attaché par son harnais aux lignes avants (« petit bout »). La présente invention concerne également les ailes de traction pilotées au sol ou depuis un engin roulant de type char à voile ou planche à roulette, ou glissant de type surf des neiges ou skis. Le document DE 20 209 515 U montre un tel dispositif de largage.

Certaines ailes de «kitesurf» (ou de traction) en 4 lignes sont équipées d'un dispositif qui permet à l'utilisateur de se libérer des lignes avants en tirant manuellement une boucle, située à portée de main. Ce système n'étant pas automatique, plusieurs utilisateurs ont à ce jour trouvé la mort ou ont été gravement blessés parce qu'ils n'ont pu se libérer de l'aile et qu'ils ont été entraînés vers la plage puis projetés contre des obstables, du fait de la puissance de l'aile. Ces systèmes de larguage manuel supposent que l'utilisateur soit parfaitement conscient et en pleine possession de ses moyens, et que le dispositif soit 100% opérationnel. Les systèmes de larguages manuels sont souvent composés de boucles de cordages imbriquées et retenues par une tige métallique actionnable par une tirette. De plus, il a souvent été constaté que ces dispositifs ne fonctionnaient pas systématiquement, du fait des frottements et du sable. Le problème fondamental provient du fait que l'utilisateur est constamment attaché par les lignes avants à l'aile en 4 lignes, et que s'il tombe et/ou perd son équilibre, il perd la maîtrise de l'aile et reste cependant attaché à l'aile qui continue de voler et de l'entraîner ; ce n'est pas le cas des autres sports comme la planche à voile ou le ski nautique qui ne présentent pas ce danger : si le véliplanchiste ou le skieur lâchent le wishbone ou la barre, ils tombent simplement à l'eau.

Le dispositif selon l'invention permet de remédier à cet inconvénient majeur. En effet, dès que l'utilisateur lâche la barre qui retient les lignes arrières de l'aile par ses extrémités et à l'intérieur de laquelle les lignes avants coulissent, la puissance du vent dans l'aile tire la barre le long des lignes avant ; la barre vient en butée contre le dispositif de larguage par pression et libère alors les lignes avants. L'aile n'étant alors plus tenues que par les lignes arrières reliées à la barre, elle ne peut plus voler, finit par tomber au sol ou à la mer et arrête alors d'entraîner l'utilisateur.

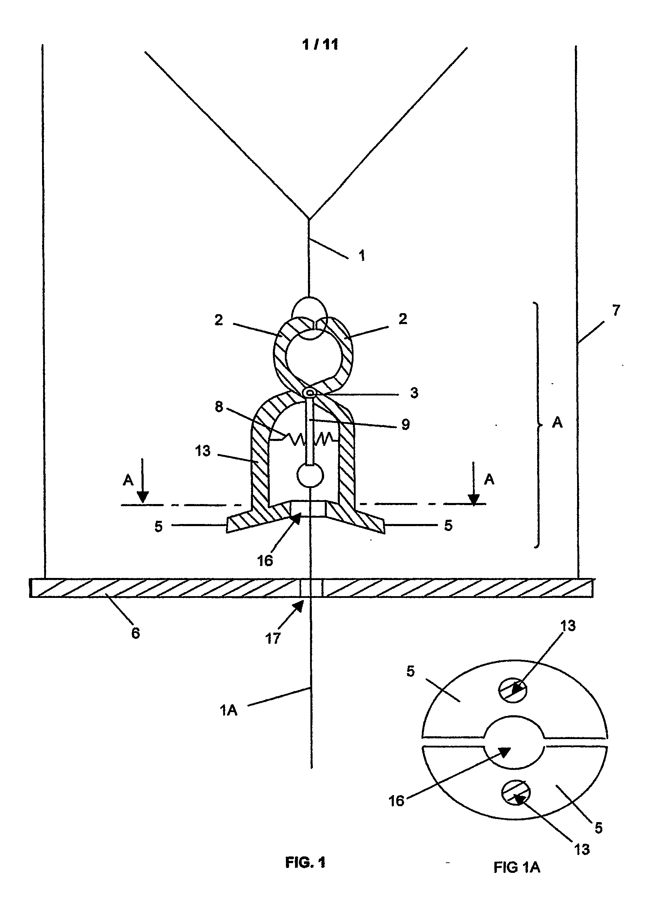

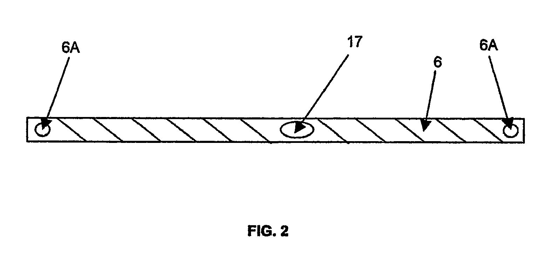

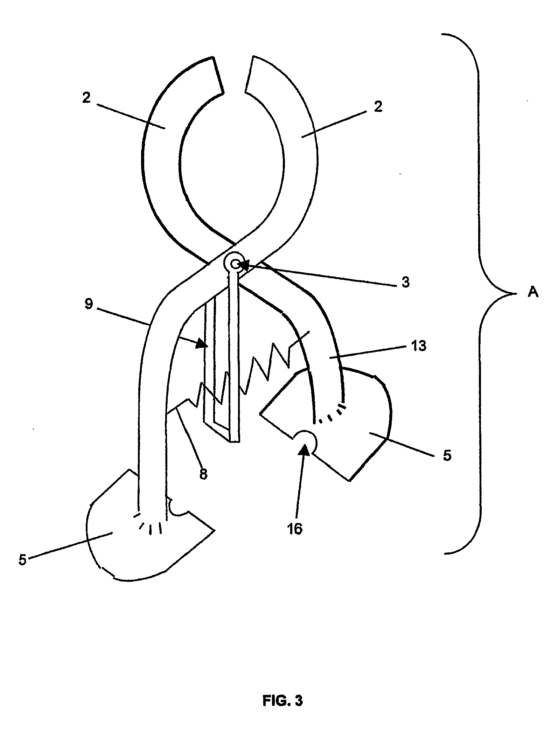

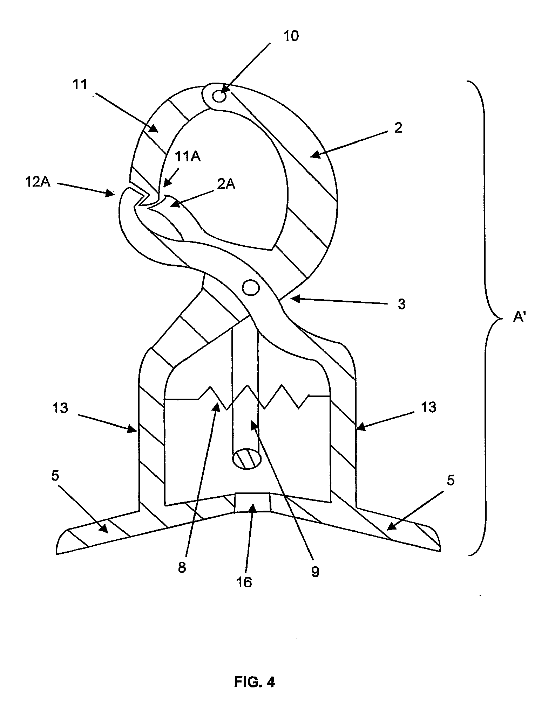

Selon des modes particuliers de réalisation :
- le dispositif peut comporter une pince avec des mâchoires retenant une boucle à laquelle sont fixées les lignes avants ; les branches inférieures de la pince sont retenues par un ressort ; les branches inférieures s'écartent dès que la barre vient en butée sur les branches, ce qui a pour effet d'écarter les mâchoires et donc de libérer les lignes avants La figure 1 représente en coupe le dispositif de l'invention (A). La figure 2 représente la barre (6) vue du dessus. La figure 3 représente la pince (A) avec les mâchoires (2) et leurs pattes inférieures (5) vues en perspective, en position entrouverte.
- le dispositif peut en variante (A') comporter un mousqueton (A') articulé à ouverture sous charge par pression, à la place d'une pince (A) à ouverture sous charge par pression. La figure 4 représente en coupe une variante de ce dispositif (A'). La forme du système de blocage (12) de la branche mobile (11) du mousqueton peut varier.
En référence à ces dessins, le dispositif comporte :
- les lignes avant (1) qui sont terminées par une boucle ;
- cette boucle est prise par les mâchoires (2) ;
- ces mâchoires sont articulées autour d'un axe (3) ;
- cet axe fait partie d'une manille (9) qui sert à relier une corde (1A), qui s'attache au harnais de l'utilisateur ;
- les deux mâchoires (2) sont prolongées à l'opposé de l'axe (3) par des pattes élargies (5), elles-mêmes reliées à un ressort (8) qui résiste à un étirement de plusieurs daN de force, afin de résister à une ouverture intempestive ;
- la barre (6) est reliée à ses extrémités (6A) aux lignes arrières (7) de l'aile et en partie centrale comporte une ouverture (17) permettant le passage et le guidage du tronçon (1A) attaché à l'utilisateur de la ligne avant (1), qui est elle-même reliée à la manille (9) articulée de la pince (A) qui retient au niveau de ses mâchoires (2) les lignes avant (1) de l'aile sous l'effet du ressort de rappel (8) des branches (13) opposées aux mâchoires (2) et pourvues en extrémité arrière de pattes élargies (5), de forme légèrement tronconique avec évidemment central (16) pour permettre le passage de la ligne (4) attachée à l'utilisateur. Lorsque le vent gonfle l'aile et que l'utilisateur lâche la barre (6), l'écartement des mâchoires (2) provoque le larguage des lignes avant (1) du fait que la barre (6) vient en appui sur les pattes (5) de sorte à les écarter à l'encontre du ressort (8).
Selon une autre variante, le système d'ouverture des mâchoires (2) peut être actionné par un bras prolongeant l'une des deux mâchoires par son côté opposé à l'axe ; ce bras est terminé par un anneau fermé ou non, en position horizontale et perpendiculaire au tronçon (1A) ou légèrement en angle par rapport au tronçon (1A) et entourant le tronçon (1A). La forme circulaire de l'anneau (5, 5', 5'' ou 5''') permet d'accepter que la barre (6) vienne pousser l'anneau (5, 5', 5'' ou 5''') selon n'importe quel angle et n'importe quelle direction et donc provoquer l'ouverture des mâchoires (2) ou du mousqueton (11).
Selon une autre variante non illustrée, le dispositif peut comporter un ressort qui fonctionne par pression pour ouvrir les mâchoires (2) plutôt que par étirement : le ressort peut alors être fixé entre une des mâchoires (2) et la branche inférieure (13) de la mâchoire opposée (2).
Selon une autre variante non illustrée, le dispositif peut comporter un élastique à la place d'un ressort (8). Lorsqu'une pince à mâchoires (A) est utilisée plutôt qu'une pince à mousqueton (A'), les mâchoires (2) peuvent se refermer en se touchant bord à bord, ou en se chevauchant sur quelques millimètres à leur extrémité, de façon à se refermer pour emprisonner les lignes avant (1).
Selon une autre variante non illustrée, l'ouverture de la pince à mâchoires (A) ou à mousqueton (A') peut être provoquée par un fil relié à l'un des bras (13)(13A) ou à la machoire inférieure du mousqueton (11) et à l'utilisateur : lorsque le fil est en tension du fait du gonflement de la voile, la traction exercée sur le fil tire la mâchoire ou le bras et actionne par rotation l'ouverture de la pince à mâchoires (A) ou à mousqueton (A').
A titre d'exemple non limitatif, les mâchoires (2) auront des dimensions de l'ordre de 1,25 cm pour la largeur de chaque mâchoire, de 3,5 cm pour la hauteur des mâchoires et de 0,5 cm pour l'épaisseur des mâchoires. Les branches (13) opposées par l'axe (3) comportent des pattes (5) aplaties obliquement en forme de demi-cercle de 5 cm de diamètre.
La pince (A) ou le mousqueton (A') doivent résister à une charge de 1000 daN lorsqu'ils sont fermés. Ils doivent pouvoir s'ouvrir par une pression de quelques daN effectuée sur l'une ou l'autre des pattes (5). Ils doivent être réalisés de préférence en acier inoxydable ou en matériau composite, de type carbone kevlar ou matière plastique armée. En variante des modes de réalisation illustrés précédemment :

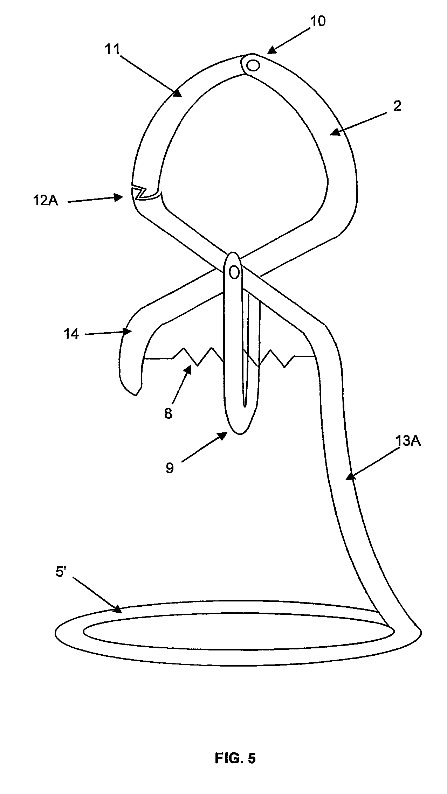

- la figure 5 représente une variante de la figure 4 relative à un mousqueton dans lequel est prévue en lieu et place des deux bras (13), un bras unique (13A) prolongé par une patte unique de forme annulaire (5'), l'autre bras (13) étant remplacé par un prolongement (14) dépourvu de patte et sur lequel est directement attaché le ressort (8). La patte (5') est placée plus ou moins perpendiculairement par rapport au tronçon (1A) de façon à l'entourer et à toujours guider la barre (6) par l'intermédiaire du tronçon (1A) la figure 5 représente également une variante de la figure 4 en ce sens que le crochet (11A)(12A) formé par le mousqueton (11) et le bras (13) peut avoir plusieurs formes : afin d'éviter au mousqueton (11) de pivoter à l'intérieur de la pince (A'), un cran d'arrêt (2A) peut être placé sur le bras auquel s'accroche le crochet (11A) du mousqueton (11), ou sur le bras (2) qui autour duquel pivote le mousqueton (11) par l'axe (10).

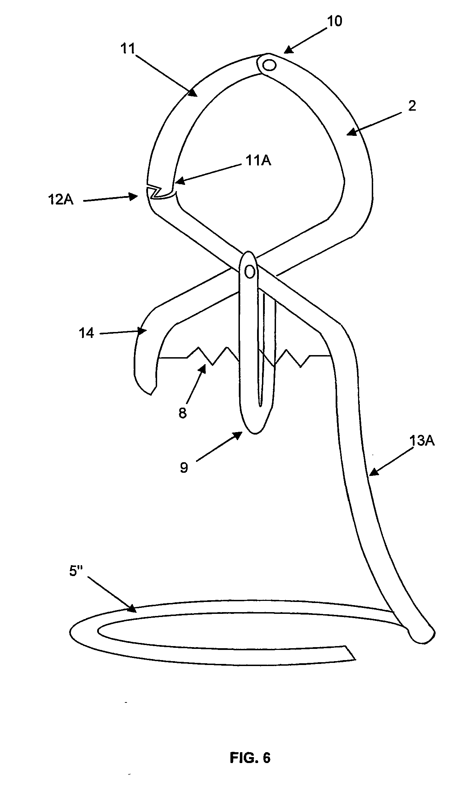

- la figure 6 représente une variante de la figure 5 relative à un bras unique (13A) prolongé par une patte unique (5") de forme circulaire mais non complètement fermée.

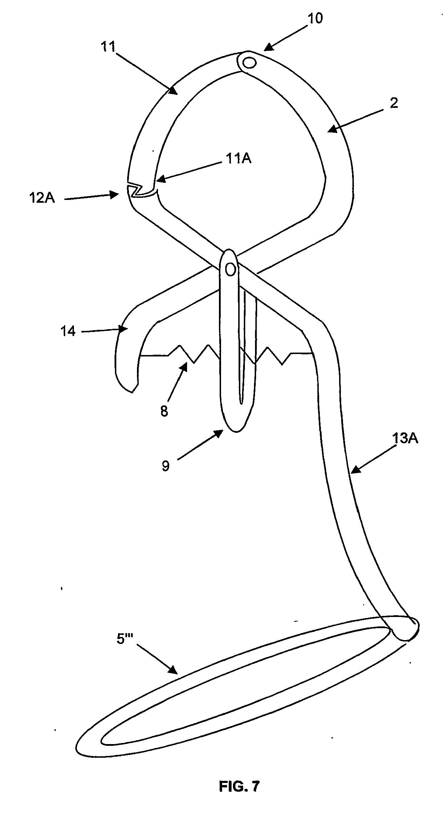

- la figure 7 est une variante de la figure 6 relative au bras prolongé d'une patte circulaire qui peut être galbée, bananée ou d'une manière générale non plane.

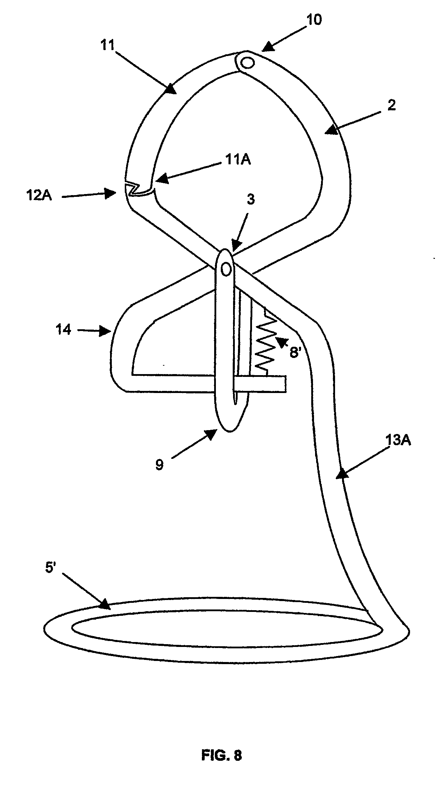

- la figure 8 est une variante de la figure 7 : le ressort (8') est placé verticalement entre le bras (13A) prolongé dans sa partie inférieure du bras circulaire (5') et le bras opposé (14), qui est coudé pour revenir sous l'autre bras, de façon à former un S et à relier le ressort (8') aux deux bras. Le bras coudé forme un S, et pivote en son centre autour de l'axe (3). La partie supérieure du S relie le mousqueton (11) par l'axe (10), et la partie inférieure du S est reliée à l'autre bras (13A) par le ressort (8).

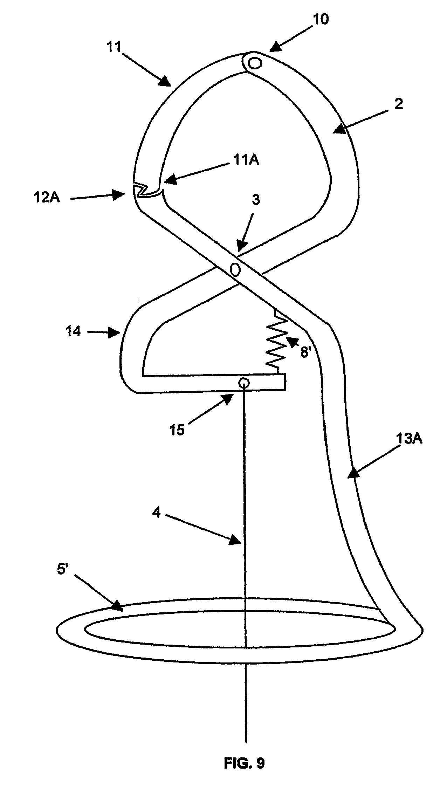

- la figure 9 est une variante de la figure 8 : l'axe central de la pince à mousqueton ne comporte plus de manille (9), et le tronçon (1A) est directement attaché à la partie inférieure du bras coudé (15) en forme de S.

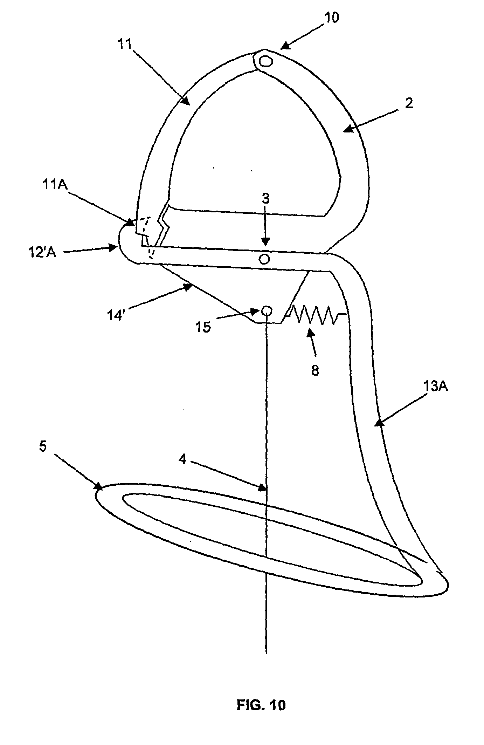

- la figure 10 est une variante de la figure 9 : le mousqueton (11) comporte un crochet (11A') qui est maintenu en position fermée par le bras (12'A) ; le mousqueton (11) comporte un rebord (11A') placé dans sa partie inférieure et formant une excroissance vers l'extérieure de la pince à mousqueton (A') qui empèche le bras (12A') de remonter lorsqu'il pivote Le bras (12'A) vient enfermer le crochet par l'extérieur, sous l'excroissance (11A') du mousqueton. Le ressort (8') est placé horizontalement entre les deux bras (13A), sous l'axe central (3). Le bras inférieur auquel est relié le tronçon avant (1A) par le point de jonction (15) peut être plein, comme sur la figure 10, ou coudé en forme de S.

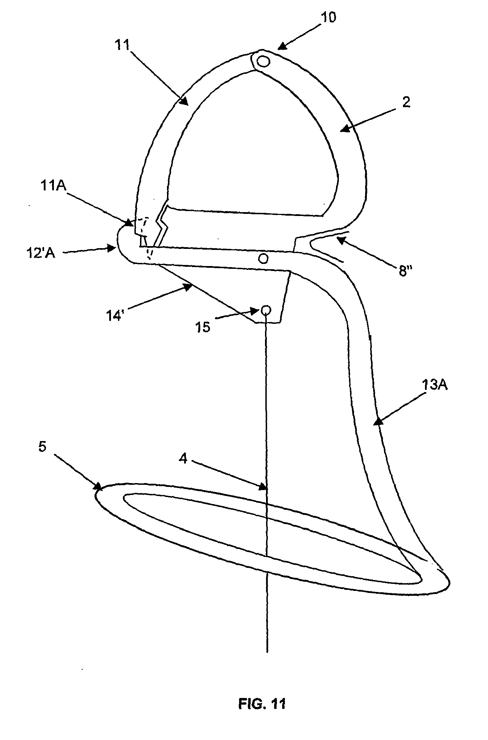

- La figure 11 est une variante de la figure 10 : le ressort est un ressort à lame coudé (8''), placé sous la mâchoire (2) opposée au mousqueton (11) et au-dessus du bras (13A). Une autre variante non illustrée consisterait à remplacer le ressort à lame par un piston fonctionnant selon le principe d'un amortisseur de voiture.
Application industrielle : l'invention doit être réalisée selon les mêmes critères de résistance et de durabilité qu'un wishbone de planche à voile ou un mousqueton de marine. L'invention, d'une manière générale, vise un dispositif permettant de décrocher les lignes ou fils de traction avant d'une aile de traction de type cerf-volant ou parapente attachée à un utilisateur au sol ou sur un support mobile tel qu'une planche de glisse, un char à voile, un surf des neiges ou une planche à roulette, ledit utilisateur tenant une barre aux extrémités de laquelle sont reliées les lignes ou fils arrière de traction de l'aile afin de commander son orientation et sa puissance par traction sur ladite barre de façon plus ou moins rapprochée du corps de l'utilisateur du type constitué d'un moyen de retenue interposé sur les lignes avant, libérable, caractérisé en ce que le dit moyen de retenue libérable (A)(À') est disposé sur les lignes avant (1) au-delà de la barre de traction (6) et comporte des moyens articulés formant pince (A) ou mousqueton (A'), maintenus en position fermée par un moyen élastique (8)(8')(8'') et en ce qu'ils sont reliés à au moins un bras (13) pivotant pourvu en extrémité libre en vis-à-vis de la barre (6) d'une patte (5)(5')(5'')(5''') conformée de sorte à venir prendre appui contre ladite barre (6), lorsque celle-ci est lâchée accidentellement ou non par l'utilisateur pour provoquer un pivotement angulaire dudit au moins un bras (13) assurant alors automatiquement le larguage de la partie des lignes avant (1) disposées au-delà du dispositif de retenue et par suite la libération totale de l'utilisateur et sa mise en sécurité du fait que l'aile n'est plus maintenue en forme et peut alors retomber librement.
Selon d'autres particularités, le dispositif est caractérisé en ce que la pince à mâchoires (A) ou à mousqueton (A') peut être maintenue fermée par un ressort (8) qui peut être hélicoïdal en acier inoxydable, en élastique en caoutchouc, à lame tordue (en métal ou en plastique), ou de type piston, bouton pression, vérin, amortisseur ou amortisseur semblable à ceux d'une voiture.
Selon d'autres particularités, le dispositif est caractérisé en ce que le moyen élastique de fermeture de la pince à mâchoires (A) ou à mousqueton (A') peut être constitué d'un élastique en caoutchouc
Selon d'autres particularités, le dispositif est caractérisé en ce qu'un bras (13A) de la pince à mâchoires (A) ou à mousqueton (A') peut être prolongé dans sa partie inférieure d'un anneau circulaire (5)(5')(5'')(5''') fermé ou non, entourant le tronçon avant (1A) et guidé par ce dernier, orienté horizontalement et perpendiculairement au tronçon avant (1A) ou légèrement en angle par rapport à l'horizontale ; la forme circulaire de l'anneau (5)(5')(5'')(5''') permet à la barre (6) de toujours toucher l'anneau, et donc de provoquer l'ouverture de la pince à mâchoires (A) ou à mousqueton (A') quelle que soit l'orientation de la barre (6) au moment où elle entre en contact avec l'anneau (5)(5')(5'')(5''').
Selon d'autres particularités, le dispositif est caractérisé en ce que le ressort (8) peut empécher l'ouverture de la pince à mâchoires (A) ou à mousqueton (A') par étirement ou par contraction, selon l'endroit où il est placé (exemple : soit entre les deux bras (13)(13A), soit entre un bras (13)(13A) et une mâchoire (2), soit entre les deux mâchoires (2), soit entre le mousqueton (11) et la mâchoire (2).
Selon d'autres particularités, le dispositif est caractérisé en ce que les pattes (5) peuvent être de formes tronconiques pleines ou évidées.
Selon d'autres particularités, le dispositif est caractérisé en ce que l'ouverture de la pince à mâchoires (A) ou à mousqueton (A') peut de manière supplémentaire ou alternative être provoquée par un fil relié à l'extrémité inférieure d'un bras (13)(13A) et à l'utilisateur ou au tronçon avant (1A), relié avant le dispositif.
Selon d'autres particularités, le dispositif est caractérisé en ce que l'anneau (5)(5') peut pivoter à l'endroit où il est relié au bras (13)(13A)
Selon d'autres particularités, le dispositif est caractérisé en ce que le bras (13)(13A) peut être articulé afin de pivoter autour d'un axe rotatif horizontal, sous l'action de la barre (6) qui vient toucher l'anneau (5)(5').
Selon d'autres particularités, l'anneau (5)(5') peut être remplacé par un tube plus ou moins long ; ce tube peut même être désolidarisé du bras (13)(13A). Il vient alors en butée contre le bras (13)(13A), afin de provoquer l'ouverture de la pince à mâchoires (A) ou à mousqueton (A'). Selon une autre variante, le tube peut agir sous forme de piston, qui vient provoquer l'ouverture de la pince à mâchoire (A), elle-même inversée verticalement par rapport à la figure 1/11, où les pinces sont formées d'ergots qui se trouvent écartés par la pression du tube (5)(5'). Selon une autre variante, le tube peut venir en butée contre un piston ; ce piston maintient solidaire deux tubes biseautés et inversés l'un par rapport à l'autre, parce que les deux parties biseautées sont encastrées l'une à l'autre par deux rails et immobilisées par leur centre par le piston qui les transperce ; lorsque le tube vient en butée contre le piston, le piston remonte suffisamment, de manière à faire remonter le piston pour permettre aux deux parties biseautées de coulisser grâce à leurs rails.
Selon d'autres particularités, le dispositif est caractérisé en ce que l'axe de la manille (9) peut pivoter autour d'un axe rotatif horizontal fixé sous la pince à mâchoires (A) ou à mousqueton (A').
Selon d'autres particularités, le dispositif est caractérisé en ce que le système de fixation du crochet (11A) du mousqueton (11) peut venir en butée contre une excroissance de la mâchoire opposée (2) ou de la mâchoire inférieure (12A) du mousqueton (11), ou une combinaison des deux.
Selon d'autres particularités, le dispositif peut comporter un anneau fixé sur la mâchoire (2) du mousqueton, servant à fixer un leash, qui sera relié à son autre extrémité aux lignes avant (1), de façon à retenir les lignes avant (1) en cas d'ouverture du mousqueton.

## Revendications

1. Dispositif de largage permettant de décrocher les lignes ou fils de traction d'une aile de type cerf-volant ou parapente ladite aile étant reliée par ledit dispositif de largage à un utilisateur au sol ou sur un support mobile **caractérisé en ce que** ledit dispositif de largage comporte un moyen de retenue libérable (A)(A') composé de moyens articulés formant pince (A) ou mousqueton (A'), un moyen élastique (8)(8')(8") apte à maintenir ledit moyen de retenu en position fermée et au moins un bras (13) pivotant relié audit moyen de retenue libérable (A)(A') et pourvu à son extrémité libre d'une patte (5)(5')(5")(5" ') apte à assurer un pivotement angulaire dudit bras (13) de façon a permettre le largage des lignes disposées au-delà du dispositif de retenue et par suite la libération totale de l'utilisateur.

2. Dispositif de largage selon la revendication 1 **caractérisé en ce qu'**il est mis en place sur une voile de traction muni d'une barre (6) permettant à l'utilisateur de diriger ladite voile, ledit largueur étant disposé sur des lignes de traction avant de ladite voile, en amont de ladite barre (6), ladite patte (5)(5')(5")(5" ') étant conformée de sorte à venir prendre appui contre ladite barre (6), lorsque celle-ci est lâchée afin de permettre l'ouverture dudit dispositif et ainsi le largage desdites lignes avants.

3. Dispositif selon la revendication 1 ou 2 **caractérisé en ce qu'**il est muni d'un fil reliant ledit bras (13) au niveau de ladite patte (5)(5')(5")(5" ') et ledit utilisateur de sorte que l'ouverture dudit largueur est induit par l'exercice d'une traction dudit utilisateur sur ledit fil.

4. Dispositif selon la revendication 1 ou 2 **caractérisé en ce qu'**il permet de décrocher les lignes ou fils de traction avant d'une aile de traction de type cerf-volant ou parapente attachée à un utilisateur au sol ou sur un support mobile tel qu'une planche de glisse, un char à voile, un surf des neiges ou une planche à roulette, ledit utilisateur tenant une barre aux extrémités de laquelle sont reliées les lignes ou fils arrière de traction de l'aile afin de commander son orientation et sa puissance par traction sur ladite barre de façon plus ou moins rapprochée du corps de l'utilisateur du type constitué d'un moyen de retenue interposé sur les lignes avant, libérable, le dit moyen de retenue libérable (A) (A') étant disposé sur les lignes avant (1) au-delà de la barre de traction (6) et comporte des moyens articulés formant pince (A) ou mousqueton (A'), maintenus en position fermée par un moyen élastique (8) (8')(8") et **en ce qu'**ils sont reliés à au moins un bras (13) pivotant pourvu en extrémité libre en vis-à-vis de la barre (6) d'une patte (5) (5')(5")(5"') conformée de sorte à venir prendre appui contre ladite barre (6), lorsque celle-ci est lâchée accidentellement ou non par l'utilisateur pour provoquer un pivotement angulaire dudit au moins un bras (13) assurant alors automatiquement le larguage de la partie des lignes avant (1) disposées au-delà du dispositif de retenue et par suite la libération totale de l'utilisateur et sa mise en sécurité du fait que l'aile n'est plus maintenue en forme et peut alors retomber librement.

5. Dispositif selon la revendication 1 2 ou 3 **caractérisé en ce que** la pince à mâchoires (A) ou à mousqueton (A') peut être maintenue fermée par un ressort (8) qui peut être hélicoïdal en acier inoxydable, en élastique en caoutchouc, à lame tordue (en métal ou en plastique), ou de type piston, bouton pression, vérin, amortisseur ou amortisseur semblable à ceux d'une voiture.

6. Dispositif selon la revendication 1 2 ou 3 **caractérisé en ce que** le moyen élastique de fermeture de la pince à mâchoires (A) ou à mousqueton (A') peut être constitué d'un élastique en caoutchouc

7. Dispositif selon la revendication 1 **caractérisé en ce qu'**un bras (13A) de la pince à mâchoires (A) ou à mousqueton (A') peut être prolongé dans sa partie inférieure d'un anneau circulaire (5) (5')(5")(5"') fermé ou non, entourant le tronçon avant (1A) et guidé par ce dernier, orienté horizontalement et perpendiculairement au tronçon avant (1A) ou légèrement en angle par rapport à l'horizontale; la forme circulaire de l'anneau (5) (5') (5") (5"') permet à la barre (6) de toujours toucher l'anneau, et donc provoquer l'ouverture de la pince à mâchoire (A) ou à mousqueton (A') quelque soit l'orientation de la barre (6) au moment où elle entre en contact avec l'anneau (5) (5')(5")(5''').

8. Dispositif selon la revendication 1 2 ou 3 **caractérisé en ce que** le ressort (8) peut empêcher l'ouverture de la pince à mâchoire (A) ou à mousqueton (A') par étirement ou par contraction, selon l'endroit où il est placé ( exemple soit entre les deux bras (13)(13A), soit entre un bras (13) (13A) et une mâchoire (2), soit entre les deux mâchoires (2), soit entre le mousqueton (11) et la mâchoire (2).

9. Dispositif selon la revendication 1 2 ou 3 **caractérisé en ce que** les pattes (5) peuvent être de forme tronconique pleines ou évidées.

10. Dispositif selon la revendication 1 2 ou 3 **caractérisé en ce que** l'ouverture de la pince à mâchoire (A) ou à mousqueton (A') peut de manière supplémentaire ou alternative être provoquée par un fil relié à l'extrémité inférieure du bras (13)(13A) et à l'utilisateur ou au tronçon avant (1A), relié avant le dispositif.

11. Dispositif selon la revendication 1 2 ou 3 **caractérisé en ce que** l'anneau (5) (5') peut pivoter à l'endroit où il est relié au bras (13) (13A)

12. Dispositif selon la revendication 1 2 ou 3 **caractérisé en ce que** l'axe de la manille(9) peut pivoter autour d'un axe rotatif horizontal fixé sous la pince à mâchoires (A) ou à mousqueton (A').

13. Dispositif selon la revendication 1 2 ou 3 **caractérisé en ce que** le système de fixation du crochet(11A) du mousqueton (11) peut venir en butée contre une excroissance de la mâchoire opposée(2) ou de la mâchoire inférieure (12A) du mousqueton(11), ou une combinaison des deux.

14. Dispositif selon la revendication 1 2 ou 3 **caractérisé en ce que** le bras (13) (13A) peut être articlé par un axe rotatif.

15. Dispositif selon la revendication 1 2 ou 3 **caractérisé en ce que** l'anneau (5) (5') peut se présenter sous forme de tube, que ce tube peut être désolidarisé du bras (13) (13A), puisqu'il est guidé par le tronçon avant(1A), et que ce tube peut venir en butée contre le bras (13) (13A) pour actionner l'ouverture de la pince à mâchoires (A) ou à mousqueton (A').

16. Dispositif selon la revendication 1 2 ou 3 **caractérisé en ce que** la mâchoire (2) du mousqueton peut comporter un anneau servant à accrocher un leash (corde), qui sera attaché à son autre extrémité aux lignes avant (1).

17. Dispositif selon les revendications 1 à 4, **caractérisé en ce que** le ressort (8), fonctionnant en tant que piston, libère les lignes avant (1) par écartement de pattes ou ergots, qui se substituent alors à la pince à mâchoires (A) ou à mousqueton (A').

18. Dispositif selon les revendications 1 à 4, **caractérisé en ce que** le ressort (8), une fois pressé, libère les lignes avant (1) par coulissement de deux éléments, qui sont normalement maintenues solidaires lorsque le ressort (8) n'est pas pressé.

## Claims

1. Release device making it possible to unhook the traction lines of a kite or paragliding type wing attached by said release device to a user on the ground or to a mobile support, **characterised in that** said release device comprises releasable holding means (A) (A') consisting of articulation means forming a clamp (A) or snap-hook (A'), elastic means (8) (8') (8") capable of holding said holding means in the closed position and at least one pivoting arm (13) connected to said releasable holding means (A) (A') and provided at its free end with a lug (5) (5') (5") (5''') capable of causing an angular pivoting movement of said arm (13) so as to enable the release of the lines arranged beyond the holding device, and consequently of entirely releasing the user.

2. Release device according to claim 1, **characterised in that** it is positioned on a traction sail fitted with a bar (6) making it possible for the user to direct said sail, which release is arranged on the traction lines in front of said sail, upstream of said bar (6), which lug (5) (5') (5") (5''') is designed so as to bear against said bar (6) when the latter is released so as to enable said device to open and thereby enable the release of said front lines.

3. Device according to claim 1 or 2, **characterised in that** it is equipped with a wire connecting said arm (13) at the level of said lug (5) (5') (5") (5''') with said user so that the opening of said release is caused when the user exerts a pulling force on said wire.

4. Device according to claim 1 or 2, **characterised in that** it makes it possible to unhook the traction lines in front of a traction wing of the kite or paragliding type attached to a user on the ground or to a mobile support such as a kiteboard, a land yacht, a snowboard or a skateboard, wherein said user holds a bar, at the ends of which the rear traction lines of the sail are connected, so as to control its direction and its power by pulling said bar more or less close to the user's body, of the type consisting of releasable holding means interposed on the front lines, which releasable holding means (A) (A') are arranged on the front lines (1) beyond the traction bar (6) and comprise articulated means forming a clamp (A) or a snap-hook (A'), held in the closed position by elastic means (8) (8') (8") and **in that** they are connected to at least one pivoting arm (13) provided at its free end opposite the bar (6) with a lug (5) (5') (5") (5''') designed so as to bear against said bar (6), when it is released, accidentally or not, by the user, in order to cause an angular pivoting of said at least one arm (13) then automatically ensuring the release of the part of the front lines (1) arranged beyond the holding device and subsequently the total release of the user and thus the user's safety because the sail is no longer held in shape and can then fall freely.

5. Device according to claim 1, 2 or 3, **characterised in that** the jaw clamp (A) or the snap-hook clamp (A') can be held closed by a spring (8), which may be helical, made of stainless steel or rubber elastic, with a twisted blade (made of metal or plastics), or of the piston, pushbutton, ram or damper type or a damper similar to those on a car.

6. Device according to claim 1, 2 or 3, **characterised in that** elastic means for closing the jaw clamp (A) or snap-hook clamp (A') can be made of a rubber elastic.

7. Device according to claim 1, **characterised in that** an arm (13A) of the jaw clamp (A) or snap-hook clamp (A') can be extended in its lower part by a circular ring (5), (5'), (5"), (5'''), closed or not, surrounding the front segment (1A) and guided by the latter, oriented horizontally and perpendicularly to the front segment (1A) or slightly at an angle with respect to the horizontal; the circular shape of the ring (5), (5'), (5"), (5''') enables the bar (6) to always touch the ring and therefore to cause the opening of the jaw clamp (A) or snap-hook clamp (A'), regardless of the orientation of the bar (6) when it comes into contact with the ring (5), (5'), (5"), (5''').

8. Device according to claim 1, 2 or 3, **characterised in that** the spring (8) can prevent the opening of the jaw clamp (A) or snap-hook clamp (A') by stretching or by contraction, according to the point where it is placed (e.g.: either between the two arms (13) (13A) or between an arm (13) (13A) and a jaw (2), or between the two jaws (2), or between the snap-hook (11) and the jaw (2).

9. Device according to claim 1, 2 or 3, **characterised in that** the lugs (5) can have solid or hollowed-out frustoconical shapes.

10. Device according to claim 1, 2 or 3, **characterised in that** the opening of the jaw clamp (A) or snap-hook clamp (A') can, in addition or alternatively, be caused by a wire connected to the lower end of the arm (13) (13A) and to the user or to the front segment (1A), connected in front of the device.

11. Device according to claim 1, 2 or 3, **characterised in that** the ring (5) (5') can pivot at the point where it is connected to the arm (13) (13A).

12. Device according to claim 1, 2 or 3, **characterised in that** pin of the shackle (9) can pivot about a horizontal rotary pin attached under the jaw clamp (A) or the snap-hook clamp (A').

13. Device according to claim 1, 2 or 3, **characterised in that** the system of attaching the hook (11A) of the snap-hook (11) can abut against a protrusion on the opposite jaw (2) or on the lower jaw (12A) of the snap-hook (11), or a combination of the two.

14. Device according to claim 1, 2 or 3, **characterised in that** the arm (13) (13A) can be articulated by a rotary pin.

15. Device according to claim 1, 2 or 3, **characterised in that** the ring (5) (5') can be in the form of a tube, which tube can be detached from the arm (13) (13A), since it is guided by the front segment (1A), and said tube can abut against the arm (13) (13A) in order to actuate the opening of the jaw clamp (A) or the snap-hook clamp (A').

16. Device according to claim 1, 2 or 3, **characterised in that** the jaw (2) of the snap-hook can comprise a ring serving to attach a leash (cord), which will be attached at its other end to the front lines (1).

17. Device according to claims 1 to 4, **characterised in that** the spring (8), functioning as a piston, releases the front lines (1) by separating the lugs, which then replace the jaw clamp (A) or the snap-hook clamp (A').

18. Device according to claims 1 to 4, **characterised in that** the spring (8), once pressed, releases the front lines (1) by the sliding of two elements, which are normally held securely when the spring (8) is not pressed.

## Patentansprüche

1. Lösevorrichtung, die das Aushaken der Zugleinen oder -fäden eines Schirms der Drachen- oder Gleitschirmflugart gestattet, wobei der Schirm über die Lösevorrichtung mit einem Benutzer am Boden oder auf einer beweglichen Stütze verbunden ist, **dadurch gekennzeichnet, dass** die Lösevorrichtung ein freigebbares Haltemittel (A, A'), das aus eine Zange (A) oder einen Karabiner (A') bildenden Gelenkmitteln besteht, ein elastisches Mittel (8, 8', 8"), das geeignet ist, das Haltemittel in geschlossener Position zu halten, und mindestens einen Schwenkarm (13) umfasst, der mit dem freigebbaren Haltemittel (A, A') verbunden und an seinem freien Ende mit einer Lasche (5, 5', 5", 5''') versehen ist, die geeignet ist, ein winkelförmiges Schwenken des Arms (13) zu gewährleisten, so dass über der Haltevorrichtung angeordnete Leinen gelöst werden können und infolgedessen der Benutzer vollkommen befreit werden kann.

2. Lösevorrichtung nach Anspruch 1, **dadurch gekennzeichnet, dass** sie an einem Zugsegel angeordnet wird, das mit einer Stange (6) versehen ist, mit der der Benutzer das Segel steuern kann, wobei der Löser an Zugleinen vor dem Segel, der Stange (6) vorgeordnet, angeordnet ist, wobei die Lasche (5, 5', 5", 5''') so angepasst ist, dass sie mit der Stange (6) in Anlage kommt, wenn diese losgelassen wird, damit die Vorrichtung geöffnet werden kann und somit die vorderen Leinen gelöst werden können.

3. Vorrichtung nach Anspruch 1 oder 2, **dadurch gekennzeichnet, dass** sie mit einem Faden versehen ist, der den Arm (13) auf der Höhe der Lasche (5, 5', 5", 5''') so mit dem Benutzer verbindet, dass das Öffnen des Lösers **dadurch** veranlasst wird, dass der Benutzer an dem Faden zieht.

4. Vorrichtung nach Anspruch 1 oder 2, **dadurch gekennzeichnet, dass** sie das Aushaken der vorderen Zugleinen oder -fäden eines Zugschirms der Drachen- oder Gleitschirmflugart gestattet, der mit einem Benutzer am Boden oder auf einer beweglichen Stütze wie einem Gleitbrett, einem Strandsegler, einem Snowboard oder einem Skateboard verbunden ist, wobei der Benutzer eine Stange mehr oder weniger nahe an seinem Körper hält, mit deren Enden die hinteren Zugleinen oder -fäden des Schirms verbunden sind, um dessen Ausrichtung und Zugkraft an der Stange zu steuern, wobei die Vorrichtung einer Art ist, die aus einem an den vorderen Leinen angeordneten freigebbaren Haltemittel besteht, wobei das freigebbare Haltemittel (A, A') an den vorderen Leinen (1) über der Zugstange (6) angeordnet ist und eine Zange (A) oder einen Karabiner (A') bildende Gelenkmittel umfasst, die durch ein elastisches Mittel (8, 8', 8") in geschlossener Position gehalten werden und mit mindestens einem Schwenkarm (13) verbunden sind, der am freien Ende gegenüber der Stange (6) mit einer Lasche (5, 5', 5", 5''') versehen ist, die dazu angepasst ist, dass sie mit der Stange (6) in Anlage kommt, wenn diese gegebenenfalls versehentlich vom Benutzer losgelassen wird, um ein winkelförmiges Schwenken des mindestens einen Arms (13) auszulösen, wodurch somit das Lösen des Teils der über der Haltevorrichtung angeordneten vorderen Leinen (1) automatisch gewährleistet wird und infolgedessen dass der Benutzer vollkommen befreit und in Sicherheit ist, da der Schirm nicht mehr aufgespannt gehalten wird und frei herabfallen kann.

5. Vorrichtung nach Anspruch 1, 2 oder 3, **dadurch gekennzeichnet, dass** die Backen- (A) oder Karabinerzange (A') durch eine Feder (8) geschlossen gehalten werden kann, die spiralförmig aus Edelstahl, aus einem Gummiband, aus einer gedrehten Zunge (aus Metall oder aus Kunststoff) oder von der Art eines Kolbens, eines Druckknopfs, eines Zylinders, eines Dämpfers oder Stoßdämpfers ähnlich wie in einem Kraftfahrzeug sein kann.

6. Vorrichtung nach Anspruch 1, 2 oder 3, **dadurch gekennzeichnet, dass** das elastische Mittel zum Schließen der Backen- (A) oder Karabinerzange (A') aus einem Gummiband bestehen kann.

7. Vorrichtung nach Anspruch 1, **dadurch gekennzeichnet, dass** ein Arm (13A) der Backen- (A) oder Karabinerzange (A') an seinem unteren Teil durch einen gegebenenfalls geschlossenen kreisförmigen Ring (5, 5', 5", 5''') verlängert sein kann, der den vorderen Abschnitt (1A) umgibt und von diesem geführt wird und der horizontal und vertikal zum vorderen Abschnitt (1A) oder leicht in einem Winkel zur Horizontalen ausgerichtet ist, wobei die Stange (6) dank der Kreisform des Rings (5, 5', 5", 5''') diesen immer berühren und somit das Öffnen der Backen- (A) oder Karabinerzange (A') bewirken kann, unabhängig von der Ausrichtung der Stange (6) zu dem Zeitpunkt, an dem sie mit dem Ring (5, 5', 5", 5''') in Kontakt kommt.

8. Vorrichtung nach Anspruch 1, 2 oder 3, **dadurch gekennzeichnet, dass** die Feder (8) das Öffnen der Backen- (A) oder Karabinerzange (A') verhindern kann, indem sie sich dehnt oder zusammenzieht, je nachdem, wo sie angeordnet ist (beispielsweise zwischen den beiden Armen (13, 13A) oder zwischen einem Arm (13, 13A) und einer Backe (2) oder zwischen den beiden Backen (2) oder zwischen dem Karabiner (11) und der Backe (2)).

9. Vorrichtung nach Anspruch 1, 2 oder 3, **dadurch gekennzeichnet, dass** die Laschen (5) massiv oder ausgespart kegelstumpfförmig sein können.

10. Vorrichtung nach Anspruch 1, 2 oder 3, **dadurch gekennzeichnet, dass** das Öffnen der Backen- (A) oder Karabinerzange (A') zusätzlich oder alternativ durch einen Faden ausgelöst werden kann, der mit dem unteren Ende des Arms (13, 13A) und mit dem Benutzer oder mit dem vor der Vorrichtung verbundenen vorderen Abschnitt (1A) verbunden ist.

11. Vorrichtung nach Anspruch 1, 2 oder 3, **dadurch gekennzeichnet, dass** der Ring (5, 5') dort schwenken kann, wo er mit dem Arm (13, 13A) verbunden ist.

12. Vorrichtung nach Anspruch 1, 2 oder 3, **dadurch gekennzeichnet, dass** die Achse des Fußrings (9) um eine horizontale Drehachse, die unter der Backen- (A) oder Karabinerzange (A') befestigt ist, schwenken kann.

13. Vorrichtung nach Anspruch 1, 2 oder 3, **dadurch gekennzeichnet, dass** das Befestigungssystem des Hakens (11A) des Karabiners (11) an einen Vorsprung der gegenüberliegenden Backe (2) oder der unteren Backe (12A) des Karabiners (11) oder einer Kombination aus beiden anschlagen kann.

14. Vorrichtung nach Anspruch 1, 2 oder 3, **dadurch gekennzeichnet, dass** der Arm (13, 13A) an einer Drehachse angelenkt sein kann.

15. Vorrichtung nach Anspruch 1, 2 oder 3, **dadurch gekennzeichnet, dass** der Ring (5, 5') in Rohrform vorliegen kann, dass dieses Rohr vom Arm (13, 13A) getrennt werden kann, da es vom vorderen Abschnitt (1A) geführt wird, und dass dieses Rohr am Arm (13, 13A) anschlagen kann, um das Öffnen der Backen- (A) oder Karabinerzange (A') durchzuführen.

16. Vorrichtung nach Anspruch 1, 2 oder 3, **dadurch gekennzeichnet, dass** die Backe (2) des Karabiners einen Ring umfassen kann, der zum Einhaken eines Seils (Leash) dient, das an seinem anderen Ende an den vorderen Leinen (1) angebracht wird.

17. Vorrichtung nach Ansprüchen 1 bis 4, **dadurch gekennzeichnet, dass** die als Kolben wirkende Feder (8) die vorderen Leinen (1) befreit, indem sie Laschen oder Zapfen voneinander beabstandet, die dann die Backen- (A) oder Karabinerzange (A') ersetzen.

18. Vorrichtung nach Ansprüchen 1 bis 4, **dadurch gekennzeichnet, dass** die Feder (8), wenn sie gedrückt wird, die vorderen Leinen (1) durch Schieben von zwei Elementen befreit, die normalerweise zusammengehalten werden, wenn die Feder (8) nicht gedrückt wird.
